# EUROPÄISCHE PATENTANMELDUNG

(11) **EP 1 787 803 A1**
(43) Veröffentlichungstag der Anmeldung: **23.05.2007**
(21) Anmeldenummer: 05090312.9
(22) Anmeldetag: 10.11.2005
(51) Int. Cl.: B32B 27/12

(54) **Verstärkte Verbundfolie**

(71) Anmelder: Faurecia Innenraum Systeme GmbH, 76767 Hagenbach (DE)
(72) Erfinder: Dorn, Felix, 78658 Zimmern (DE); Hernandez, Miguel Olmedo, 08013 Barcelona (ES)
(74) Vertreter: Pfenning, Meinig & Partner GbR

(57) **Zusammenfassung**

Die Erfindung betrifft eine Verbundfolie aus thermoplastischem Kunststoff mit einer Kernschicht und zwei die Kernschicht beidseitig bedeckenden Deckschichten, einem Verfahren zur Herstellung solch einer Verbundfolie und eine Verwendung solch einer Verbundfolie.

Erfindungsgemäß weist die Verbundfolie (1) aus thermoplastischem Kunststoff eine Kernschicht (2) und zwei die Kernschicht beidseitig bedeckenden Deckschichten auf, wobei die Kernschicht (2) sich im Material und/oder in der Struktur von den Deckschichten (3) unterscheidet, wobei die Kernschicht (2) eine Vielzahl von über die Fläche der Kernschicht (2) verteilten Öffnungen (4) aufweist, und die beidseitig die Kernschicht bedeckenden Deckschichten durch die Öffnungen (4) der Kernschicht (2) hindurch miteinander verbunden sind.

## Beschreibung

Die Erfindung betrifft eine Verbundfolie aus thermoplastischem Kunststoff mit mindestens einer Kernschicht und zwei die Kernschicht beidseitig bedeckenden Deckschichten, eine Verwendung einer derartigen Verbundfolie, sowie ein Verfahren zur Herstellung einer solchen Verbundfolie.

Verbundfolien sind grundsätzlich bekannt. Sie werden beispielsweise in der Fahrzeugindustrie als Dekormaterialien für Verkleidungen eingesetzt.

Des Weiteren ist es bekannt, einen Film oder ein Tape aus Kunststoff dreischichtig mit einer Kernschicht und die Kernschicht beidseitig bedeckenden Deckschichten aufzubauen (WO 03/008190) bzw. eine Folie oder eine Leichtbauplatte aus Kunststoff dreischichtig mit einer Kernschicht und die Kernschicht beidseitig bedeckende Deckschichten aufzubauen (DE 195 20 478 A1). Gemäß diesen beiden Druckschriften liegt der Vorteil des mehrlagigen Aufbaus darin, die verschiedenen mechanischen Eigenschaften von Kernschicht und Deckschicht vorteilhaft zu kombinieren.

Problematisch an mehrlagigen Folien ist die Verbindung der einzelnen Lagen, beispielsweise einer Kernschicht, mit den benachbarten Lagen, beispielsweise zwei Deckschichten. So lassen sich im Allgemeinen Lagen aus zwei unterschiedlichen Kunststoffen nicht direkt miteinander verbinden. Demgemäß sind bekannte mehrlagige Verbundfolien üblicherweise aus Schichten aufgebaut, welche zumindest ähnliche Kunststoffkomponenten aufweisen.

Auch wenn in einer mehrlagigen Folie die einzelnen Schichten aus einem ähnlichen oder gleichen Kunststoff bestehen sollten, ist eine ausreichende Festigkeit des Verbunds dadurch nicht automatisch gewährleistet. Neben den Materialeigenschaften sind nämlich auch die Struktureigenschaften der einzelnen Schichten zu berücksichtigen. Besteht beispielsweise eine Kernschicht aus einem Gewebe, die Deckschichten haben aber eine glatte Oberfläche, so kann auch in diesem Falle, obwohl Deckschichten und Kernschicht aus demselben Kunststoff bestehen, unter gewissen äußeren Bedingungen die Verbindung der Schichten sich stark verschlechtern, oder sich sogar die Schichten trennen.

Aufgabe der vorliegenden Erfindung ist somit, eine Verbundfolie herzustellen, bei der die einzelnen Lagen fest miteinander verbunden sind. Eine weitere Aufgabe der Erfindung ist es, ein Verfahren zur Herstellung solch einer Verbundfolie zu schaffen. Zusätzlich schlägt die Erfindung eine besonders vorteilhafte Anwendung einer derartigen Verbundfolie vor.

Diese Aufgaben werden durch eine Vorrichtung bzw. ein Verfahren nach den unabhängigen Ansprüchen gelöst.

Dadurch, dass die Kernschicht eine Vielzahl von über die Fläche der Kernschicht verteilten Öffnungen aufweist, und die beidseitig die Kernschicht bedeckenden Deckschichten durch die Öffnungen der Kernschicht hindurch miteinander verbunden sind, wird eine Verbundfolie mit einer festen Verbindung der einzelnen Lagen realisiert.

Insbesondere ist es möglich, für die Kernschicht ein anderes Material und/oder eine andere Struktur als die der Deckschichten zu wählen, ohne die Festigkeit der Verbundfolie zu gefährden.

Insbesondere lassen sich mit einer derartigen Verbundfolie vorteilhafterweise verschiedene Funktionen in einer Verbundfolie integrieren. So lässt sich beispielsweise als Kernschicht eine Schicht einsetzen, die sehr gute Eigenschaften bezüglich der Zugbelastung aufweist, und als Deckschichten zwei Schichten, welche sich gut verschweißen lassen. Eine derartige Verbundfolie würde somit gute mechanische Eigenschaften aufweisen, sich gut verarbeiten lassen (die Verbundfolie ließe sich beispielsweise mittels Vibrationsschweißen an einem anderen Bauteil befestigen, ohne dass die Kernschicht in Mitleidenschaft gezogen wird), und eine gute Festigkeit, auch unter extremen Bedingungen, zeigen.

Die Kernschicht selbst kann einlagig oder aber auch mehrlagig sein.

Auch die Verbundfolie kann mehr als die drei genannten Schichten aufweisen.

Die Öffnungen können beispielsweise rechteckförmig, elliptisch oder wabenförmig sein. Vorteilhafterweise sind die Öffnungen gleichmäßig über die Fläche der Kernschicht verteilt.

Unter einer Verbundfolie soll hier ein flächiges Bauteil verstanden werden, welches eine Dicke von mehreren Millimetern nicht überschreitet. Insbesondere soll unter einer erfindungsgemäßen Verbundfolie kein starres Bauteil, sondern ein flexibles Bauteil verstanden werden.

Vorteilhafte Weiterbildungen der Erfindung werden in den abhängigen Ansprüchen beschrieben.

Eine vorteilhafte Weiterbildung der Erfindung sieht vor, dass die Polymerketten der Kernschicht zumindest teilweise orientiert sind, so dass die Verbundfolie in mindestens einer dem Verlauf der Fläche der Verbundfolie entsprechend der Richtung der Orientierung folgenden Richtung verstärkt ist.

Eine derartige Verbundfolie ist für eine hohe Zugbelastung in mindestens einer Richtung ausgelegt.

Eine weitere vorteilhafte Weiterbildung der Erfindung sieht vor, dass die Kernschicht eine hochverzogene Folie enthält.

Durch das Verziehen einer Folie werden die einzelnen Polymerketten ausgerichtet. Die Ausrichtung der Polymerketten bestimmt sich nach der Verstreckungsrichtung und dem Verstreckungsgrad der Folie.

Die Öffnungen in solch einer Folie können beispielsweise durch Stanzen eingebracht werden.

Insbesondere kann die Kernschicht auch mehrere derartige Folien aufweisen.

Eine weitere vorteilhafte Weiterbildung der Erfindung sieht vor, dass die Kernschicht ein Gewebe aus Kunststofffasern oder Kunststoffbändchen enthält.

Die Struktur des Gewebes, d.h., die Ausrichtung der Kunststofffasern oder -bändchen, legt die Vorzugsbelastungsrichtung bzw. -richtungen der Kernschicht fest. (Die Kunststofffasern bzw. Kunststoffbändchen werden üblicherweise so hergestellt, dass die Polymerketten in Richtung des Verlaufs der Faser oder des Bändchens orientiert werden. Hierdurch erhält die Faser bzw. das Bändchen eine besonders hohe mechanische Festigkeit dieser Richtung.)

Ein Gewebe aus Kunststoffbändchen kann beispielsweise durch das Zuschneiden einer vorzugsweise gestreckten Folie und anschließendes Weben der einzelnen Bändchen hergestellt werden.

Alternativ können auch Kunststofffasern miteinander zu einzelnen Bändchen verschmolzen werden bzw. zur Herstellung einer Folie/Halbzeug verwendet werden, die anschließend in Bändchen zugeschnitten wird, und aus diesen Bändchen das Gewebe gebildet werden. Derartige Bändchen bestehen insbesondere aus parallel liegenden Kunststofffasern.

Die Kernschicht kann mehrere Schichten eines derartigen Gewebes aufweisen.

Eine weitere vorteilhafte Weiterbildung der Erfindung sieht vor, dass die Kunstfasern oder Kunststoffbändchen im Bereich ihrer Mantelfläche miteinander und vorzugsweise auch mit der Deckschicht verschmolzen sind.

Durch das Verschmelzen der Kunststofffasern oder - Bändchen mit den benachbarten Kunststofffasern oder - Bändchen wird ein fester Verbund erzeugt. Dadurch, dass jeweils nur die Mantelfläche der Kunststofffaser oder des Bändchens verschmilzt, bleibt der Kern der Kunststofffaser oder des Bändchens und somit die Verstärkungseigenschaft der Kunststofffaser oder des Bändchens erhalten.

Durch das Verschmelzen von Deckschicht mit der Mantelfläche der Kunststofffasern oder der Bändchen wird die Kernschicht mit den Deckschichten verbunden, was vorteilhaft für die Festigkeit der Verbundfolie ist. Je nach Dichte und Dicke des Gewebes kann diese Verschmelzung nur einen Teil der Fasern oder -Bändchen betreffen, beispielsweise nur die Fasern oder Bändchen im Bereich der Oberfläche der Kernschicht.

Eine weitere vorteilhafte Weiterbildung der Erfindung sieht vor, dass die Deckschicht kompakt ist.

Unter "kompakt" soll hier verstanden werden, dass die Deckschicht keine Gaseinschlüsse oder freie Zwischenräume aufweist und somit eine hohe Dichte besitzt, insbesondere keine Schaumschicht und kein Gewebe ist.

Vorzugsweise besitzt die Deckschicht auch keine nennenswerten Faseranteile. Eine derartige Deckschicht würde sich insbesondere für das Schweißen eignen.

Grundsätzlich kann allerdings auch ein Faseranteil in der Deckschicht vorgesehen sein.

Eine erfindungsgemäße Deckschicht würde man beispielsweise durch Extrudieren einer Kunststoffmasse auf die Kernschicht erhalten.

Eine weitere vorteilhafte Weiterbildung der Erfindung sieht vor, dass als Kunststoff für Kernschicht und Deckschichten Polyolefine, insbesondere Polypropylene, verwendet werden.

Besonders vorteilhaft ist es, wenn Kernschicht und Deckschichten aus einem einzigen Kunststoff, beispielsweise aus Polypropylen, bestehen, da sich eine derartige Verbundfolie gut recyceln lässt. Möglich ist aber auch eine uneinheitliche Wahl der Kunststoffe. Insbesondere können die beiden Deckschichten aus unterschiedlichen Kunststoffen bestehen, falls trotzdem eine gute Verbindung zwischen diesen beiden Deckschichten gewährleistet werden kann.

Des Weiteren können die für die Schichten verwendeten Kunststoffe auch Zusatzstoffe, wie beispielsweise Mineralien oder Faseranteile, enthalten.

Des Weiteren offenbart die Erfindung ein Verfahren zur Herstellung einer derartigen Verbundfolie.

Nach dem erfindungsgemäßen Verfahren wird auf eine Kernschicht, die eine Vielzahl von durch die Kernschicht hindurchtretenden, über die Fläche der Kernschicht verteilten Öffnungen aufweist, beidseitig zur Bildung der Deckschichten eine thermoplastische Kunststoffmasse aufextrudiert, und die aufextrudierte Masse, vorzugsweise unter einer Temperatur nahe des Schmelzpunktes der Kernschicht, in die Öffnungen der Kernschicht gepresst.

Wird das Verfahren unter einer Temperatur nahe des Schmelzpunktes der Kernschicht durchgeführt, so kann die Kernschicht sich durch Anschmelzen mit den Deckschichten verbinden. Die Temperatur sollte nahe des Schmelzpunktes der Kernschicht liegen, damit die Kernschicht nicht aufschmilzt und möglicherweise vorhandene Verstärkungseigenschaften verloren gehen. Erfindungsgemäß bevorzugt ist ein Bereich von etwa +-10°C um die Temperatur des Schmelzpunktes der Kernschicht, wobei dies je nach Wahl des Materials natürlich etwas variieren kann. So ist angegebener Bereich besonders gut für Polypropylen und -Derivate geeignet.

Mittels Tiefziehen kann die Folie in die gewünschte Form gebracht werden. So können beispielsweise durch Tiefziehen Bauteilzentrierungen, Anlegeflächen, montagegerechte Geometrie und Bauteilgeometrie der Verbundfolie erzeugt werden.

In einem weiteren Schritt kann die Folie zugeschnitten und auch gestanzt werden.

Des Weiteren schlägt die Erfindung die Verwendung einer erfindungsgemäßen Verbundfolie als Fangband und/oder Scharnier in einer Airbagabdeckung vor, wobei die Airbagabdeckung neben der Verbundfolie einen Träger mit einer Öffnung und eine Airbagklappe, welche in der Öffnung des Trägers angeordnet ist, enthält, und die Verbundfolie den Träger und die Airbagklappe miteinander verbindet.

Besonders vorteilhaft als obiges Scharnier und/oder Fangband sind erfindungsgemäße Verbundfolien mit einer Kernschicht, die die Festigkeit der Folie gegen Zugbelastung gewährleistet, und Deckschichten, mit denen die Verbundfolie rückseitig mit der Airbagplatte verschweißt werden kann.

Des Weiteren bestehen Verbundfolie und Airbagdeckel vorteilhafterweise aus einem einheitlichen Kunststoff, insbesondere einem Polyolefin, (dies muss nicht die Zusatzstoffe umfassen), um das Recycling dieser Elemente zu vereinfachen.

Eine vorteilhafte Weiterbildung der Erfindung sieht vor, dass die Airbagabdeckung ein Halteelement aufweist, welches mit dem Träger verbunden ist, und über welches die Verbundfolie mit dem Träger verbunden ist, wobei das Halteelement als Deformationselement ausgebildet ist, dass geeignet ist, einer durch ein Öffnen der Airbagklappe bei Auslösung eines Airbags verursachten Zugbelastung durch seine Verformung um eine zu dem Rand der Airbagklappe im Wesentlichen parallelen Achse nachzugeben

Durch diese vorteilhafte Weiterbildung wird ein verbessertes Energie- und Beschleunigungsmanagement erreicht und die Energie aus der Klappe abgebaut, was ein besseres Aufschlagverhalten auf die Instrumententafel bewirkt. Die Energie der beschleunigten Klappe wird durch das Deformationselement in Verformungsarbeit umgewandelt, so dass sich die Airbagklappe mit ihrer drehachsennahen Kante ohne Kollision mit der Abdeckung während des Öffnungsvorganges drehen kann.

Weiterhin reduziert das Nachgeben des Deformationselementes die Belastung der Verbundfolie bei der Airbagauslösung, wodurch ein Reißen der Verbundfolie verhindert wird.

Die Länge der Verbundfolie ist vorzugsweise minimal bemessen, derart, dass es noch montiert werden kann.

Durch die verkürzte Verbundfolie in der Airbagentfaltungsphase führt die Klappe früher eine Drehbewegung aus und wird nicht ruckartig in diese Drehbewegung gezwungen, woraus geringere Reaktionskräfte resultieren.

Vorzugsweise kann das Deformationselement als blechförmiges Element oder beliebiges Strangpressprofil aus Metall, Kunststoff, Kohlenstofffäden oder -fasern oder dergleichen ausgebildet sein, das beim Erreichen einer definierten Grenze der Verformungsenergie dem flexiblen flächigen Element kontinuierlich Länge nachgeben kann.

Die definierte Grenze der Verformungsenergie wird durch die Temperatur und durch die untere Grenzlast des Airbagmoduls vorgegeben, d.h. bei tiefen Temperaturen z.B. -40°C und der unteren Grenzlast muss ein verlässliches Verformen gewährleistet sein.

Das Deformationselement kann unterschiedliche Formen aufweisen, es kann beispielsweise L-förmig, Z-förmig, V-förmig, halbmondförmig, spiralförmig oder dergleichen ausgebildet sein, wobei der flächigen Verbundfolie ermöglicht wird, sich in der Richtung der Airbagklappe unter der Wirkung der Verformungskraft zu bewegen.

Durch Wahl der Materialeigenschaften durch Einbringen von Kerben, Löchern oder anderen Aussparungen (Verringerung der Verformungsarbeit) und von Laschen oder Sicken (Erhöhung der Verformungsarbeit) kann die Verformbarkeit gesteuert werden.

Die Erfindung wird nun anhand von Ausführungsbeispielen, welche teilweise durch Figuren dargestellt werden, verdeutlicht. Dabei zeigen
- Fig. 1: eine erfindungsgemäße Verbundfolie enthaltend eine Kernschicht und zwei die Kernschicht beidseitig bedeckenden Deckschichten,
- Fig. 2: eine Kernschicht in Form einer hochverzogenen Folie,
- Fig. 3: eine Kernschicht in Form eines Gewebes,
- Fig. 4: eine Airbagabdeckung, bei der die erfindungsgemäße Verbundfolie als Airbagscharnier und Fangband verwendet wird, und
- Fig. 5: einen schematischen Aufbau einer Vorrichtung zum Herstellen der erfindungsgemäßen Verbundfolie.

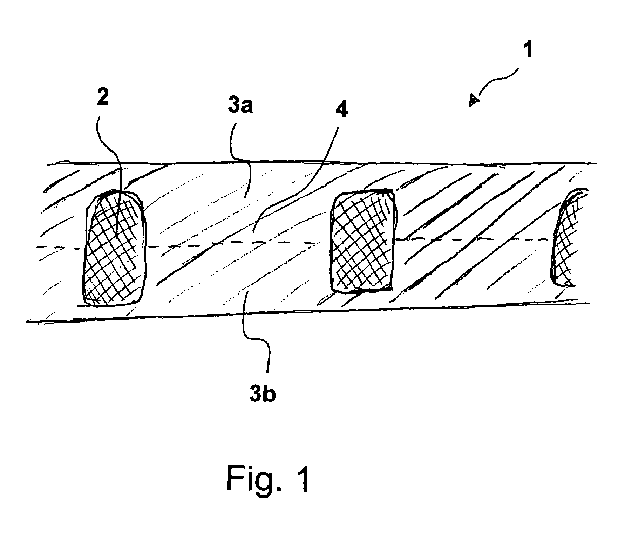

Fig. 1 zeigt eine erfindungsgemäße Verbundfolie 1 in einer Querschnittsansicht. Die Verbundfolie 1 enthält eine Kernschicht 2 und zwei die Kernschicht 2 beidseitig bedeckende Deckschichten 3. Die Kernschicht 2 weist eine Vielzahl von über die Fläche der Kernschicht 2 verteilten Öffnungen 4 auf. Durch diese Öffnungen 4 sind die die Kernschicht beidseitig bedeckenden Deckschichten 3a und 3b unmittelbar miteinander verbunden.

Die Öffnungen 4 besitzen eine einheitliche Größe und sind gleichmäßig über die Fläche der Kernschicht verteilt. Möglich wären auch eine uneinheitliche Größe sowie eine ungleichmäßige Verteilung der Öffnungen 4, was für bestimmte Arten der Verwendung der Folie sinnvoll sein kann.

Das Verhältnis der geschlossenen Fläche der Kernschicht 2 zur offenen Fläche der Kernschicht 2 liegt bei etwa 0,3. Die offene Fläche der Kernschicht wird hier durch die Summe der Fläche der Öffnungen in der Kernschicht gegeben.

Dieses Verhältnis zwischen offener und geschlossener Fläche der Kernschicht kann variieren. Vorteilhaft ist ein Verhältnis im Bereich von 0,2 bis 0,5. Ein zu kleiner Wert würde bedeuten, dass die Eigenschaften der Kernschicht ungenügend ausgenutzt werden, ein zu großer, dass die Verbindungsfläche der beiden Deckschichten zu klein ist, um eine genügend starke Verbindung zwischen den Deckschichten zu gewährleisten.

Die Öffnungen 4 sind in diesem Ausführungsbeispiel rechteckig mit einer Kantenlänge K1 = 5 mm und K2 = 2 mm. Eine Öffnung 4 hat somit eine Fläche 10 mm².

Grundsätzlich können die Kantenlängen K1 und K2 variiert werden. Vorteilhafte Werte für K1 liegen im Bereich von 5 mm bis 8 mm, für K2 im Bereich von 0,8 mm bis 2,0 mm.

Auch die Größe der Öffnungen 4 kann variiert werden. Vorteilhafterweise liegt die Fläche einer einzelnen Öffnung im Bereich von 1 mm² bis 20 mm², vorzugsweise 4 mm² bis 16 mm².

Anstatt einer Rechteckform kann grundsätzlich auch eine andere geometrische Form für die Öffnungen 4 verwendet werden, beispielsweise eine Ellipse, insbesondere ein Kreis.

Die Kernschicht hat in diesem Ausführungsbeispiel eine Dicke von 0,5 mm. Die Dicke der Deckschicht liegt bei etwa 0,08 mm. Diesbezüglich ist zu beachten, dass die Dicke der jeweiligen Deckschicht 3a oder 3b über der Kernschicht 2, also nicht in den Öffnungen 4, gemessen ist. Des Weiteren kann diese Dicke variieren, was insbesondere dann der Fall ist, wenn die Kernschicht 2 eine Struktur, beispielsweise eine Gewebestruktur, aufweist. Der Wert der Dicke von Deckschicht bzw. Kernschicht ist somit als ein Richtwert bzw. Mittelwert anzusehen.

Erfindungsgemäß bevorzugt liegt die Dicke der Kernschicht 2 in einem Bereich von 0,02 mm bis 1,0 mm, vorzugsweise 0,4 mm bis 0,7 mm, und die Dicke der Deckschicht im Bereich von 0,03 mm bis 0,2 mm, vorzugsweise 0,05 mm bis 0,1 mm. In diesen Bereichen weist die Verbundfolie 1 eine genügende Flexibilität und gute mechanische Eigenschaften auf, wodurch sie insbesondere als Airbagscharnier oder Fangband als Bestandteil einer Airbagabdeckung geeignet ist.

Allerdings kann im fertigen Bauteil die Dicken der Schichten sich von den hier angegebenen Werten unterscheiden, beispielsweise dann, wenn die Verbundfolie durch einen Umformprozeß oder Tiefziehen nachbearbeitet wurde.

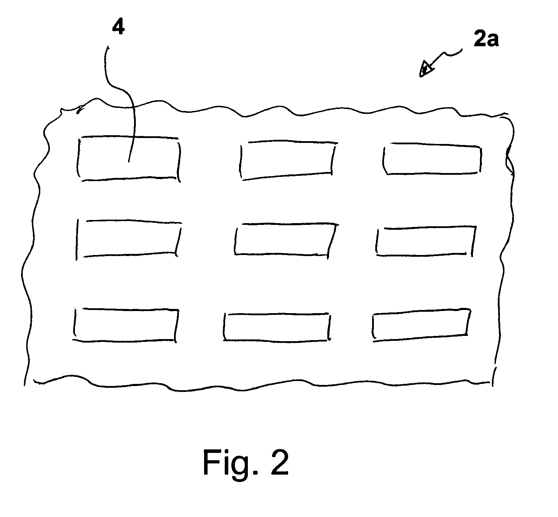

Fig. 2 zeigt eine erste Ausführungsform einer erfindungsgemäßen Kernschicht 2. In diesem Falle besteht die Kernschicht aus einer hochverzogenen Folie 2a. In der Fig. 2 sind deutlich die Öffnungen 4 zu sehen, welche rechteckförmig sind, und gleichmäßig über die Fläche der gereckten Kernschicht 2a verteilt sind. Die Öffnungen 4 wurden hier durch Stanzen erzeugt. Alternativ ist auch ein Schneiden möglich.

Unterschiedliche Größen der Öffnungen 4 können in diesem Falle beispielsweise durch unterschiedliche Stanzwerkzeuge erzeugt werden.

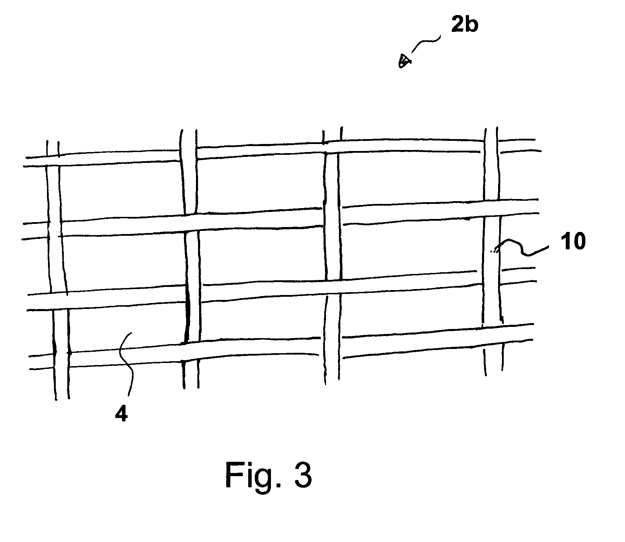

Fig. 3 zeigt eine zweite Ausführungsform einer erfindungsgemäßen Kernschicht 2. In diesem Falle besteht die Kernschicht 2b aus einem Gewebe von einzelnen Bändchen 10. Die Bändchen 10 enthalten ausgerichtete Kunststoffmolekülketten.

Unterschiedliche Größen der Öffnungen 4 können in diesem Falle beispielsweise durch das Auslassen einzelner Bändchen oder über die Änderung der Webdichte der Bändchen erreicht werden.

Die Deckschichten 3a und 3b sind in diesem Ausführungsbeispiel kompakt. Sie weisen insbesondere keine Faserstruktur auf.

Deckschichten und Kernschicht bestehen in diesem Ausführungsbeispiel aus Polypropylen. Alternativ können auch andere Thermoplaste, insbesondere aus der Gruppe der Polyolefine, eingesetzt werden, insbesondere auch in unterschiedlicher Kombination sowie mit Zusatzstoffen.

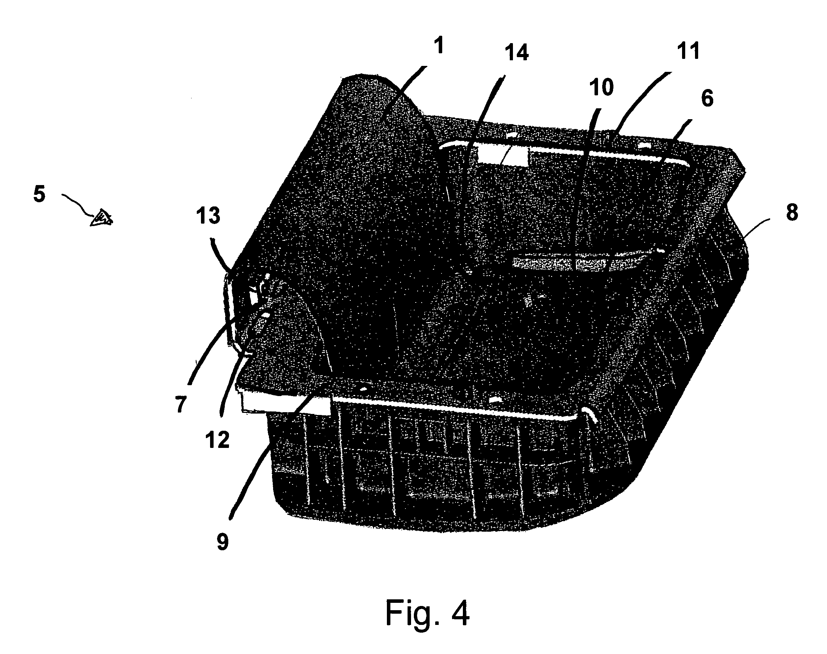

Fig. 4 zeigt eine Airbagabdeckung, bei der die erfindungsgemäße Verbundfolie als Airbagscharnier und Fangband verwendet wird.

Die in der Figur dargestellte Anordnung zur Abdeckung eines Airbags weist eine in einen Airbagrahmen 8 aus Kunststoff, Metall oder Leichtmetall eingesetzte Klappe 6 auf, die in die Instrumententafel eines Kraftfahrzeugs eingesetzt ist. Die Klappe 6 weist Verstärkungselemente und Anschläge 10 auf. Mit der Klappe 6 fest verbunden ist eine erfindungsgemäße flexible, flächige Verbundfolie 1.

Die Verbundfolie 1 kann in die Airbagklappe 6 eingebettet sein oder rückseitig anliegend mit dieser mittels Schrauben, Nieten, durch Kleben und/oder Verspannen oder dergleichen verbunden sein, wobei es gegebenenfalls auch die gesamte Klappe abdecken kann.

Erfindungsgemäß bevorzugt ist eine Schweißverbindung zwischen Klappe 6 und Verbundfolie 1, welche beispielsweise mittels Vibrationsschweißens erzeugt werden kann.

Selbstverständlich ist es möglich, dass anstelle nur einer Verbundfolie 1 mehrere bandartig nebeneinander liegende Verbundfolien vorgesehen sind.

Auf den Airbagrahmen 8, der den Schusskanal verlängert, ist ein flacher Rahmen 9 aus Metall, Kunststoff oder Kohlenstofffasern aufgesetzt und durch angeformte Klemm-, Rast- oder Schnappelemente 11 fixiert. An diesem flachen Rahmen 9 bzw. an Rahmen 9 und Kunststoffrahmen 8 wird der restliche Teil des Airbagmoduls mit Gasgenerator montiert. Dieser Aufbau ist nur beispielhaft angegeben, es können auch andere Formen und Arten des Gehäuses des Airbagmoduls und/oder des Schusskanals vorgesehen werden, wie sie auch aus dem Stand der Technik bekannt sind.

Wie aus der Figur zu erkennen ist, ist an diesen flachen Rahmen 9, im Ausführungsbeispiel aus Metall, an dem Rahmenschenkel, der sich parallel zum Befestigungsrand der Airbagklappe 6 erstreckt ein Blechschenkel 7 angeformt, der mit einem leichten Radius senkrecht zur Schussrichtung abgebogen ist. Dabei sind in der Biegung Ausnehmungen 12 vorgesehen. An dem Blechsteg 7 ist die Verbundfolie 1 mittels Schrauben 13 oder Nieten oder dergleichen befestigt.

Der Metall- bzw. Blechsteg 7 dient als Deformationselement, das eine auf die Verbundfolie 1 wirkende Belastung beim Auslösen des Airbags zumindest teilweise absorbieren soll. Diese Energieabsorption bzw. die Verringerung der Spannungsspitzen im Translations- / Rotationspunkt geschieht durch Verformen bzw. Umbiegen oder Abknicken des Steges 7 um eine zu dem Rand der Airbagklappe 6, von dem die Verbundfolie 1 abgeht, im wesentlichen parallele Achse. Dabei muss die Verformbarkeit des Deformationselementes 7 an die beim Auslösen des Airbags auftretende Belastung durch die beschleunigte Airbagklappe 2 angepasst sein.

Das bedeutet, dass das Deformationselement so ausgebildet ist, dass es bei Belastung in Zugrichtung durch die Verbundfolie 1, hervorgerufen durch die Beschleunigung infolge des Aufblasens des Airbags und der Masse der Airbagklappe, gerade soviel Energie aufnehmen kann, dass selbst bei tiefen Temperaturen, wie z.B. -40°C und der unteren Grenzlast des Airbagmoduls ein verlässliches Verformen des Deformationselementes gewährleistet wird.

Wenn der Airbag ausgelöst wird, wird die Abdeckklappe 6 durch den sich aufblasenden Airbag bzw. durch die explosionsartige Druckerhöhung von einer sie umgebenden Berandung des Rahmens 8 bzw. eines Verkleidungsteils, in das die Airbagklappe integriert ist, abgehoben und führt eine Drehbewegung um den als Scharnierkante dienenden Rand 14 der Abdeckklappe 6, von dem die Verbundfolie 1 abgeht, aus. Aufgrund der auftretenden Energie der beschleunigten Klappe 6 wird eine Zugbelastung sowohl auf die Verbundfolie als auch auf das Deformationselement 7 ausgeübt, wobei das kontinuierliche Nachgeben des Gewebes und die Verformung des Deformationselementes 7 durch Abknicken bzw. Umbiegen die Energie aus der Klappe 6 abbauen.

Die Länge der Verbundfolie 1 zwischen dem abgehenden Rand 14 der Klappe 6 bzw. seiner Befestigungslinie und dem Deformationselement 7 sollte so gewählt werden, dass die Airbagklappe 6 sich von ihrer Berandung ausreichend abheben kann und diese sie nicht bei der Öffnung behindert, aber andererseits sollte sie auch so klein wie möglich sein, damit die Klappe nicht weit weg fliegt und ruckartig zur Drehbewegung gezwungen wird.

In dem beschriebenen Ausführungsbeispiel ist das Deformationselement 7 mit dem Metallrahmen 9 einstückig verbunden. Selbstverständlich ist es auch denkbar, dass dieses als ein Stück Blech ausgebildete Deformationselement getrennt von dem Metallrahmen 9 an einem festen Teil des Airbagmoduls oder einem sonstigen Trägerteil angebracht sein kann und/oder in das flächige Element integriert sein kann.

Die Erfindung wurde mittels einer Airbagklappe beschrieben, es ist jedoch auch möglich, dass mehrere Klappen vorgesehen sind.

Als erfindungsgemäße Verbundfolie eignet sich insbesondere ein Verbundfolie 1 mit einer Kernschicht 2, die auf Zugbelastung ausgelegt ist, beispielsweise einer Kernschicht 2 mit/aus einer hochverzogenen Folie 2a oder mit einem Faserverbund 2b.

Des weiteren ist es besonders vorteilhaft, Material von Verbundfolie und Airbagklappe einheitlich zu wählen. Dies erlaubt zum einen eine gute Schweißverbindung von Verbundfolie 1 und Airbagklappe 6, sowie ein einfaches Recycling.

Die erfindungsgemäße Verbundfolie 1 erlaubt es insbesondere, eine feste Schweißverbindung mit der Deckschicht 3 zu erreichen. Die Kernschicht 2 muss diesbezüglich nicht in Mitleidenschaft gezogen werden.

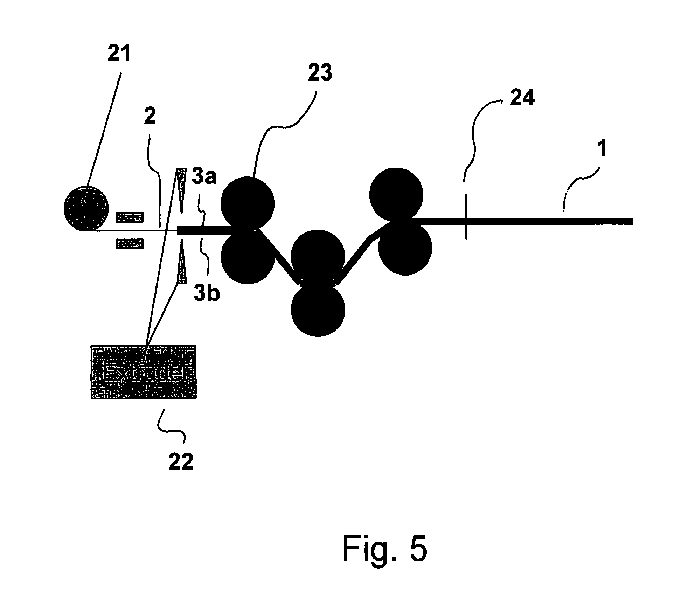

Fig. 5 zeigt schematisch eine Vorrichtung, mit der eine erfindungsgemäße Verbundfolie nach dem erfindungsgemäßen Verfahren hergestellt werden kann.

Eine flächige Kernschicht 2, beispielsweise ein Gewebe 2b oder eine hochverzogene Folie 2a, die eine Vielzahl von durch die Kernschicht 2 hindurchtretenden, über die Fläche der Kernschicht 2 verteilten Öffnungen 4 aufweist, wird von einer Rolle 21 abgewickelt und einem Extruder 22 zugeführt. Mittels des Extruders wird eine thermoplastische Kunststoffmasse unter- und oberseitig auf die Kernschicht 2 aufextrudiert. Die mit der Kunststoffmasse beidseitig bedeckte Kernschicht 2 wird im Folgenden einem Heißkalander 23 zugeführt. Durch den Heißkalander wird die Kunststoffmasse gleichmäßig verteilt, und insbesondere beidseitig in die Öffnungen 4 der Kernschicht 2 gepresst, so dass sich die obere Deckschicht 3a und die untere Deckschicht 3b miteinander verbinden. Gleichzeitig wird durch den Heißkalander die Kernschicht auf eine Temperatur nahe ihres Schmelzpunktes aufgewärmt, so dass die Kernschicht zumindest an der Oberfläche an die Deckschichten anschmilzt. Nach dem Durchgang durch den Heißkalander 23, und nachdem eine genügend Zeit zum Abkühlen verstrichen ist, wird die Verbundfolie mittels einer Schneide 24 getrennt und als Plattenware abgelegt.

Die Verbundfolie 1 lässt sich nun insbesondere mittels Tiefziehen auf die gewünschte Bauteilform bringen.

Durch Beschneiden und Stanzen lässt sich das Halbzeug auf die benötigte Größe bringen bzw. notwendige Öffnungen, beispielsweise für Befestigungen, einbringen.

## Patentansprüche

1. Verbundfolie (1) aus thermoplastischen Kunststoff mit einer Kernschicht (2) und zwei die Kernschicht (2) beidseitig bedeckenden Deckschichten (3), wobei die Kernschicht (2) sich im Material und/oder in der Struktur von den Deckschichten (3) unterscheidet, **dadurch gekennzeichnet, dass** die Kernschicht (2) eine Vielzahl von über die Fläche der Kernschicht (2) verteilten Öffnungen (4) aufweist, und die beidseitig die Kernschicht (2) bedeckenden Deckschichten (3) durch die Öffnungen (4) der Kernschicht (2) hindurch miteinander verbunden sind.

2. Verbundfolie nach Anspruch 1, **dadurch gekennzeichnet, dass** die Polymerketten der Kernschicht (2) zumindest teilweise orientiert sind, so dass die Verbundfolie in mindestens einer dem Verlauf der Fläche der Verbundfolie folgenden Richtung entsprechend der Richtung der Orientierung verstärkt ist.

3. Verbundfolie nach Anspruch 2, **dadurch gekennzeichnet, dass** die Kernschicht (2) eine hochverzogene Folie (2a) enthält.

4. Verbundfolie nach Anspruch 2, **dadurch gekennzeichnet, dass** die Kernschicht (2) ein Gewebe (2b) aus Kunststofffasern oder Kunststoffbändchen enthält.

5. Verbundfolie nach Anspruch 4, **dadurch gekennzeichnet, dass** die Kunststofffasern oder Kunststoffbändchen im Bereich ihrer Mantelfläche miteinander und vorzugsweise auch mit der Deckschicht verschmolzen sind.

6. Verbundfolie nach einem der vorhergehenden Ansprüche, **dadurch gekennzeichnet, dass** die Deckschicht (3) kompakt ist.

7. Verbundfolie nach einem der vorhergehenden Ansprüche, **dadurch gekennzeichnet, dass** als Kunststoff für Kernschicht (2) und Deckschichten (3) Polyolefine, insbesondere Polypropylene, verwendet werden.

8. Verbundfolie nach einem der vorhergehenden Ansprüche, **dadurch gekennzeichnet, dass** das Verhältnis der geschlossenen Fläche der Kernschicht (2) zur offenen Fläche der Kernschicht (2) im Bereich von 0,2 bis 0,5 liegt.

9. Verbundfolie nach einem der vorhergehenden Ansprüche, **dadurch gekennzeichnet, dass** eine einzelne Öffnung (4) eine Fläche von 1 mm² bis 20 mm², vorzugsweise 4 mm² bis 16 mm², aufweist.

10. Verbundfolie nach einem der vorhergehenden Ansprüche, **dadurch gekennzeichnet, dass** die Öffnungen (4) eine Rechteckstruktur mit den Kantenlängen K1 und K2 mit K1 von 5 mm bis 8 mm und K2 von 0,8 mm bis 2,0 mm aufweisen.

11. Verbundfolie nach einem der vorhergehenden Ansprüche, **dadurch gekennzeichnet, dass** die Deckschicht eine Dicke von 0,03 mm bis 0,2 mm, vorzugsweise 0,05 mm bis 0,1 mm, aufweist.

12. Verbundfolie nach einem der vorhergehenden Ansprüche, **dadurch gekennzeichnet, dass** die Kernschicht (2) eine Dicke von 0,02 mm bis 1,0 mm, vorzugsweise 0,4 mm bis 0,7 mm, aufweist.

13. Verwendung einer Verbundfolie (1) nach einem der Ansprüche 1 bis 12 als Fangband und/oder Scharnier in einer Airbagabdeckung (5), wobei die Airbagabdeckung (5) neben der Verbundfolie (1) einen Träger mit einer Öffnung und eine Airbagklappe (6), welche in der Öffnung des Trägers angeordnet ist, enthält, und die Verbundfolie (1) den Träger und die Airbagklappe (6) miteinander verbindet.

14. Verwendung einer Verbundfolie nach Anspruch 13, **dadurch gekennzeichnet, dass** die Airbagabdeckung ein Halteelement (7) aufweist, welches mit dem Träger verbunden ist, und über welches die Verbundfolie (1) mit dem Träger verbunden ist, wobei das Halteelement (7) als Deformationselement ausgebildet ist, dass geeignet ist, einer durch ein Öffnen der Airbagklappe (6) bei Auslösung eines Airbags verursachten Zugbelastung durch seine Verformung um eine zu dem Rand der Airbagklappe im Wesentlichen parallelen Achse nachzugeben.

15. Airbagvorrichtung nach Anspruch 14, **dadurch gekennzeichnet, dass** das Deformationselement (7) als blechförmiges Element oder Strangpressprofil aus Metall, Kunststoff und/oder Kohlenstoff ausgebildet ist, an dem die Verbundfolie (1) durch Schrauben, Nieten, Kleben, Schweißen und/oder Verspannen befestigt ist und das seinerseits mit einem feststehenden Konstruktionselement verbunden ist.

16. Airbagvorrichtung nach einem der Ansprüche 14 bis 15, **dadurch gekennzeichnet, dass** ein den Schusskanal zumindest teilweise begrenzender Airbagrahmen (8), vorgesehen ist, dessen zum Fahrzeuginnenraum gerichtete Öffnung von der Airbagklappe (6) abgedeckt ist.

17. Airbagvorrichtung nach Anspruch 16, **dadurch gekennzeichnet, dass** der Airbagrahmen (8) mit einem flachen Rahmen (9) zur Befestigung eines Gasgeneratormoduls verbunden ist.

18. Airbagvorrichtung nach Anspruch 17, **dadurch gekennzeichnet, dass** das Deformationselement (7) mit dem flachen Rahmen (9) verbunden ist.

19. Airbagvorrichtung nach Anspruch 18, **dadurch gekennzeichnet, dass** das Deformationselement (7) einstückiger Bestandteil des Rahmens (9) ist.

20. Airbagvorrichtung nach einem der Ansprüche 14 bis 19, **dadurch gekennzeichnet, dass** die Verbundfolie (1) in die Airbagklappe (6) eingebettet und/oder rückseitig anliegend mit dieser verbunden ist.

21. Airbagvorrichtung nach einem der Ansprüche 14 bis 20, **dadurch gekennzeichnet, dass** das Deformationselement (7) zur Verringerung der Verformungsarbeit mit Ausnehmungen oder Kerben oder dergleichen oder zur Erhöhung der Verformungsarbeit mit Laschen, Sicken oder dergleichen versehen ist.

22. Verfahren zur Herstellung einer Verbundfolie (1) wie beschrieben in einem der Ansprüche 1 bis 12, wobei auf eine Kernschicht (2), die eine Vielzahl von durch die Kernschicht (2) hindurchtretenden, über die Fläche der Kernschicht (2) verteilten Öffnungen (4) aufweist, beidseitig zur Bildung der Deckschichten (3) eine thermoplastische Kunststoffmasse aufextrudiert wird, und die aufextrudierte Masse, vorzugsweise unter einer Temperatur nahe des Schmelzpunktes der Kernschicht, zumindest einseitig in die Öffnungen (4) der Kernschicht (2) gepresst wird.

23. Verfahren nach Anspruch 22, **dadurch gekennzeichnet, dass** in einem weiteren Schritt die Verbundfolie (1) tiefgezogen wird.
